# EUROPÄISCHE PATENTSCHRIFT

(11) **EP 4 289 663 B1**
(45) Veröffentlichungstag und Bekanntmachung des Hinweises auf die Patenterteilung: **22.01.2025**
(21) Anmeldenummer: 22177735.2
(22) Anmeldetag: 08.06.2022
(51) Int. Cl.: B60N 2/14, B60N 2/24, B60N 2/01, B64D 11/06, B60N 2/015, B61D 33/00

(54) **FAHRGASTSITZANORDNUNG FÜR EIN PERSONENTRANSPORTFAHRZEUG WIE Z.B. EINEN BUS ODER EIN SCHIENENFAHRZEUG**
PASSENGER SEAT ARRANGEMENT FOR A PASSENGER TRANSPORT VEHICLE SUCH AS A BUS OR A RAILWAY VEHICLE
AGENCEMENT DE SIÈGE DE PASSAGER POUR UN VÉHICULE DE TRANSPORT DES PERSONNES TEL QU'UN BUS OU UN VÉHICULE FERROVIAIRE

(43) Veröffentlichungstag der Anmeldung: 13.12.2023
(73) Patentinhaber: Tricon AG, 72138 Kirchentellinsfurt (DE)
(72) Erfinder: König, Thomas, 72138 Kirchentellinsfurt (DE); Kassner, Dieter, 72138 Kirchentellinsfurt (DE)
(74) Vertreter: dompatent von Kreisler Selting Werner - Partnerschaft von Patent- und Rechtsanwälten mbB

(56) Entgegenhaltungen:
- EP-A1- 3 995 380
- DE-A1- 102009 056 715
- JP-A- H06 297 986

## Beschreibung

Die Erfindung betrifft eine Fahrgastsitzanordnung für ein Personentransportfahrzeug, bei dem es sich insbesondere um einen Bus oder ein Schienenfahrzeug aber ebenso auch um ein Schiff oder ein Flugzeug handeln kann.

Die Betreiber von Personentransportmitteln für insbesondere den ÖPNV stehen mitunter vor dem Problem, in Hauptverkehrszeiten Raum für eine vergleichsweise Anzahl an Fahrgästen bereitstellen zu müssen, während die Nutzung in den Nebenverkehrszeiten eher auf eine geringere Anzahl von Fahrgästen ausgelegt sein muss. Die Marktteilnehmer suchen nach flexiblen, "atmenden" Lösungen für die Inneneinrichtungsbestuhlung, die sich jeweils an die wechselnden Anforderungen ausrichten können sollten. In diesem Zusammenhang geht es stets um den Wechsel von Klappsitzen längs an der Außenwand in den Hauptverkehrszeiten (um dadurch eine große Anzahl von Steh- und Stellplätzen zu schaffen) zur klassischen Querbestuhlung in den Nebenverkehrszeiten. Leider existieren bisher am Markt lediglich weniger praxistaugliche Vorschläge.

Beispiele für flexible Innenraumeinrichtungen von Personentransportfahrzeugen sind aus DE-A-10 2017 117 046, DE-U-1 850 045 und DE-A-10 2009 056 715 bekannt.

Eine Fahrgastsitzanordnung nach dem Oberbegriff des Anspruchs 1 ist aus JP-A-H06 297986 bekannt.

Aufgabe der Erfindung ist es, eine Fahrgastsitzanordnung für ein Personentransportfahrzeug zu schaffen, bei dem die Wechsel von Längsbestuhlung zur Querbestuhlung und umgekehrt komfortabel möglich sind und dies mit einer Verbesserung der Nutzung des Raumes bei Längsbestuhlung für den Transport von von den Fahrgästen potentiell mitgeführten Gegenständen verbunden ist.

Zur Lösung dieser Aufgabe wird mit der Erfindung eine Fahrgastsitzanordnung für ein Personentransportfahrzeug wie z.B. einen Bus oder ein Schienenfahrzeug vorgeschlagen, die versehen ist mit
- einer ersten Gruppe von Sitzen mit mindestens einem ersten Sitz und
- einer zweiten Gruppe von Sitzen mit mindestens einem zweiten Sitz,
- wobei jeder Sitz einer Gruppe ein Sitzgestell oder die mehreren Sitze einer Gruppe ein gemeinsames Sitzgestell aufweisen,
- wobei jeder Sitz eine Rückenlehne und eine insbesondere klappbare Sitzfläche aufweist,
- wobei die Sitzgestelle beider Gruppen an ihren einen ersten Seitenenden an dem Boden, an dem Dach oder an der Seitenwand des Personentransportfahrzeugs längsverschiebbar bewegbar sowie (um eine Vertikal- bzw. Hochachse) schwenkbar und haltbar und/oder abstützbar sind,
- wobei die Sitzgestelle beider Gruppen jeweils aus einer Längsbestuhlungsposition, in der sie nebeneinander angeordnet sind, in eine Querbestuhlungsposition, in der sie mit den Rückenlehnen der Sitze einander zugewandt angeordnet sind, und umgekehrt überführbar sind,
- wobei die Sitzgestelle beider Gruppen an ihren jeweiligen anderen zweiten Seitenenden mittels eines Gelenks um mindestens eine Vertikalachse schwenkbar miteinander gekoppelt sind,
wobei die Fahrgastsitzanordnung ferner aufweist
- eine mit der Seitenwand des Fahrzeugs und entweder dem Dach des Fahrzeugs oder dem Boden des Fahrzeugs oder sowohl dem Dach als auch dem Boden des Fahrzeugs verbindbare Horizontalstrebe, die quer zur Längserstreckung des Fahrzeugs und oberhalb der beiden Sitzgestelle oder hinter oder zwischen oder oberhalb der Rückenlehnen der Sitze der beiden Sitzgestelle verläuft, wenn sich diese in ihrer Querbestuhlungsposition befinden, wobei diese Horizontalstrebe bei sich in ihrer Längsbestuhlungsposition befindenden Sitzgestellen zur Halterung von von Fahrgästen mitgeführten Gegenständen, wie z.B. Koffer oder Sportgeräten oder Fahrgeräten wie z.B. Roller oder auch Rollstühle und von Fahrrädern vorgesehen ist, die durch Auflegen der vorderen Abschnitte ihrer Sättel auf der Horizontalstrebe auf dieser hängend positionierbar sind,
- wobei die Sitzgestelle der beiden Gruppen an ihren gelenkig miteinander verbundenen zweiten Seitenenden an der Horizontalstrebe direkt oder indirekt verschiebbar geführt und gehalten sind.

Das erfindungsgemäße Konzept sieht ein Paar von Sitzgestellen vor, an denen jeweils mindestens ein Sitz angeordnet ist, der eine Rückenlehne und eine Sitzfläche aufweist, die insbesondere klappbar ist. Jedes Sitzgestell weist ein erstes Seitenende auf, das an dem Boden und/oder an dem Dach und/oder an der Seitenwand des Personentransportfahrzeugs längsverschiebbar geführt ist. Auch erfolgt die Halterung bzw. Abstützung der Sitzgestelle am Personentransportfahrzeug an diesen ersten Seitenenden. Überdies sind die Sitzgestelle an ihren ersten Seitenenden um eine Vertikal- oder Hochachse schwenkbar.

In der Längsbestuhlungsposition befinden sich nun zwei derartige Sitzgestelle aufeinanderfolgend innen an der Außenwand des Fahrzeugs. Dort sind sie gegen ungewollte Verschiebe- und Verschwenkbewegungen gesichert.

Soll nun die Querbestuhlungsposition eingenommen werden, so werden die beiden Sitzgestelle an ihren in der Längsbestuhlungsposition einander zugewandten zweiten Seitenenden voneinander bzw. von der Außenwand entriegelt und von der Außenwand ins Innere des Fahrzeugs wegbewegt. Dabei verschieben sich die ersten Seitenenden entlang der Innenseite der Außenwand aufeinander zu, bis die beiden Sitzgestelle mit den Rückenlehnen ihrer Sitze einander zugewandt positioniert sind. In dieser Querbestuhlungsposition erfolgt wiederum eine Arretierung der Sitzgestelle miteinander und/oder jedes Sitzgestells am Fahrzeug.

Mit der Erfindung wird also quasi eine "faltbare" Fahrgastsitzanordnung als Lösung für eine einfache Überführung der Fahrgastsitzanordnung aus der Längsbestuhlung in die Querbestuhlung und umgekehrt vorgeschlagen. Hinsichtlich einer Verbesserung des Komforts für die Handhabung der erfindungsgemäßen Fahrgastsitzanordnung ist vorgesehen, dass die Sitzgestelle beider Gruppen an ihren jeweiligen anderen zweiten Seitenenden mittels eines Gelenks um mindestens eine Vertikalachse schwenkbar miteinander gekoppelt sind. Dies hat den Vorteil, dass man beide Sitzgestelle gleichzeitig mit einer Bewegung längs verschiebt, um sie aus der Längsbestuhlungsposition in die Querbestuhlungsposition zu überführen. In umgekehrter Richtung muss man die Sitzgestelle zunächst an ihren ersten Seitenenden, die der Innenseite der Wand zugewandt sind, auseinander bewegen, um auf diese Weise die beiden Gestelle aus ihrer Querbestuhlungsposition in die Längsbestuhlungsposition zu überführen. Diese Vorgehensweise gilt im Übrigen auch dann, wenn die an ihren in der Querbestuhlungsposition gangseitig positionierten zweiten Seitenenden nicht gelenkig miteinander verbunden sind.

Die für die Betreiber von Personentransportmitteln interessante "flexible" Innenraumgestaltung hat neben dem bisher beschriebenen Aspekt noch einen zweiten Vorteil. Bei Längsbestuhlung wird nämlich nicht nur zusätzlicher Raum für eine erhöhte Anzahl von Fahrgästen sondern auch Raum für den Transport von von Fahrgästen mitgeführten Gegenständen geschaffen. Insbesondere kann dieser Raum genutzt werden, um Fahrräder zu transportieren. Beispiele für diesbezügliche im Stand der Technik bekannte Ansätze sind in DE-A-10 2009 056 715 und DE-A-195 39 788 beschrieben.

Bisherige Konzepte für die Fixierung von insbesondere Fahrrädern in Personentransportmitteln setzen darauf, die Fahrzeuge an der typischerweise fest eingebauten Längsbestuhlung mittels Gurten zu befestigen. Andere Lösungen betreffen das "Aufhängen" von Fahrrädern an vergleichsweise weit oben im Fahrzeug befindlichen Aufhängekonstruktionen.

Es ist auch bekannt, ein Fahrrad dadurch "abzustellen", dass es mit der Unterseite des vorderen Teils seines Sattels auf einer Horizontalstrebe abgesetzt wird. Damit "hängt" das Fahrrad mit dem Sattel auf der Horizontalstrebe ruhend.

Das zuvor beschriebene erfindungsgemäß eingesetzte Fahrgastsitzanordnungskonzept eignet sich nun ideal zur Verwendung in Kombination mit einer Horizontalstrebe, die vom Boden aus nahe der Innenseite der Außenwand nach oben und weiter quer zum Gang oder auch von der Außenwand aus quer bis zum Gang verläuft, um von dort entweder zum Boden oder zum Dach oder auch zu beiden weiter zu verlaufen. Die Horizontalstrebe kann nun bei Längsbestuhlungsposition der Sitzgestelle genutzt werden, um bspw. Fahrräder in der zuvor beschriebenen Art und Weise aufzuhängen oder andere Gegenstände zu befestigen. In der Querbestuhlungsposition ist sie nicht zu benutzen, stört aber auch nicht, da sie je nach Höhe entweder oberhalb der Rückenlehnen der Sitzgestelle oder zwischen den Rückenlehnen der "Rücken-an-Rücken" angeordneten Sitze verläuft.

Erfindungsgemäß wird die Horizontalstrebe aber auch zum Tragen bzw. Stützen der beiden Sitzgestelle in deren Längs- und vor allem Querbestuhlungsposition genutzt werden, indem die beiden Sitzgestelle an ihren gegebenenfalls gelenkig miteinander verbundenen zweiten Seitenenden direkt oder indirekt an der Horizontalstrebe verschiebbar geführt und gehalten d.h. "aufgehängt" sind.

Die Erfindung zeichnet sich also unter anderem aus durch eine mit der Seitenwand des Fahrzeugs und entweder dem Dach des Fahrzeugs oder dem Boden des Fahrzeugs oder sowohl mit dem Dach als auch mit dem Boden des Fahrzeugs verbindbare Horizontalstrebe, die quer zur Längserstreckung des Fahrzeugs und oberhalb der beiden Sitzgestelle oder hinter oder zwischen oder oberhalb der Rückenlehnen der Sitze der beiden Gestelle verläuft, wenn sich diese in ihrer Querbestuhlungsposition befinden, wobei diese Horizontalstrebe bei sich in ihrer Längsbestuhlungsposition befindenden Sitzgestellen zur Halterung von von Fahrgästen mitgeführten Gegenständen, wie z.B. Koffer oder Sportgeräten oder Fahrgeräten wie z.B. Roller oder auch Rollstühle oder von Fahrrädern vorgesehen ist, die durch Auflegen der vorderen Abschnitte ihrer Sättel auf der Horizontalstrebe auf dieser hängend positionierbar sind. Die Horizontalstrebe kann durch ein erstes Verbindungselement mit der Außen-(Seiten-)Wand des Fahrzeugs, entlang der sich die beiden Sitzgestelle in ihrer Längsbestuhlungsposition befinden, und durch ein zweites Verbindungselement mit dem Dach und/oder mit dem Boden des Fahrzeugs und/oder sowohl mit dem Dach als auch mit dem Boden des Fahrzeugs verbunden sein.

Wie bereits oben angedeutet, ist vorteilhafterweise vorgesehen, dass die beiden Sitzgestelle in deren Längsbestuhlungsposition und insbesondere auch in deren Querbestuhlungsposition miteinander verriegelbar und insbesondere miteinander automatisch verriegelbar sind und/oder dass die beiden Sitzgestelle in den beiden Positionen zusätzlich zu ihrer Längsverschiebbarkeitsführung an dem Fahrzeug gegen eine Bewegung in die jeweilige andere Position arretierbar sind.

Zur Realisierung der Längsverschiebbarkeit der Sitzgestelle kann in vorteilhafter Weise vorgesehen sein, dass dazu die beiden Sitzgestelle an ihren ersten Enden direkt oder indirekt an einem Führungsprofil in oder an der Seitenwand und/oder in oder an dem Boden und/oder in an dem Dach des Fahrzeugs längsverschiebbar bewegbar sind.

Die Sitzgestelle der erfindungsgemäßen Fahrgastsitzanordnung müssen in beiden Positionen stabilisiert sein, um den Belastungen bei Nutzung der Sitze standzuhalten. Hierzu kann bspw. an den ersten Seitenenden der beiden Sitzgestelle jeweils ein erstes Tragelement angeordnet sein, wobei die beiden Sitzgestelle mit dem jeweiligen Tragelement schwenkbar verbunden sind und wobei die ersten Tragelemente an einem Führungsprofil in oder an dem Boden des Fahrzeugs und/oder an einem Führungsprofil in oder an dem Dach des Fahrzeugs oder an einem Führungsprofil in oder an der Seitenwand des Fahrzeugs längsverschiebbar sind, wobei das jeweilige Führungsprofil parallel zur Längsachse des Fahrzeugs verläuft. Das erste Tragelement kann bspw. ein sich am Boden abstützendes Stützelement sein. Oder aber das erste Tragelement ist ein Bauteil, das an einem Führungsprofil innen an der Außenwand längsverschiebbar geführt ist und statische und dynamische Kräfte bei Nutzung der Sitze sowohl in der Längsbestuhlungsposition als auch in der Querbestuhlungsposition aufnimmt. Dies gilt auch dann, wenn die Sitzgestelle in der Querbestuhlungsposition nach Art von einseitig eingespannten Balken fungieren, die Sitzgestelle also an ihren zweiten Seitenenden keine Abstützung gegenüber dem Boden des Fahrzeugs aufweisen.

Da derartige Konzepte allerdings notwendigerweise hochstabile Verbindungen zur Außenwand und/oder zum Boden des Fahrzeugs benötigen, ist es von Vorteil, wenn die gegebenenfalls miteinander gelenkig verbundenen zweiten Seitenenden der beiden Sitzgestelle ein gemeinsames zweites Tragelement oder getrennte zweite Tragelemente zum Abstützen gegen den Boden und/oder für eine Verbindung mit dem Dach eines Fahrzeugs aufweisen.

In weiterer zweckmäßiger Ausgestaltung der Erfindung kann vorgesehen sein, dass das oder die zweiten Tragelemente an einem Führungsprofil in oder an dem Boden des Fahrzeugs und/oder an einem Führungsprofil in oder an dem Dach des Fahrzeugs oder an einem Führungsprofil in oder an der Seitenwand des Fahrzeugs längsverschiebbar ist bzw. sind, wobei das jeweilige Führungsprofil quer zur Längserstreckung des Fahrzeugs verläuft, oder dass das oder die zweiten Tragelemente eine Tragposition, in der sie auf dem Boden ruhen und/oder mit der Decke verbunden sind, oder eine Parkposition, in der sie weggeklappt oder von dem Gestell abgenommen sind, einnehmen können. Das oder die zweiten Tragelemente können bspw. auch mittels unterseitiger Gleit- oder Rollkörper auf dem Boden entlanggleiten oder entlangrollen, wenn die Fahrgastsitzanordnung von der einen Bestuhlungsposition in die andere Bestuhlungsposition überführt wird. Eine Verbindung der zweiten Seitenenden der beiden Sitzgestelle in deren Querbestuhlungsposition über das oder die zweiten Tragelemente sowohl zum Boden als auch zum Dach (, was bspw. durch eine Stange realisiert werden kann,) würde dafür sorgen können, dass Vandalismus erschwert würde, indem sich die beiden Sitzgestelle an ihren in der Querbestuhlungsposition gangseitigen zweiten Seitenenden nicht gewaltsam anheben oder gegen den Boden drücken lassen können.

Die erfindungsgemäße Fahrgastsitzanordnung wurde vorstehend beschrieben anhand eines Paars von Sitzgestellen. Innerhalb eines Personentransportfahrzeugs können nun mehrere derartige Paare von Sitzgestellen vorgesehen sein. Dabei ist es möglich, dass die Sitzgestelle ein oder zwei oder auch drei Sitze aufweisen. Auch ein "Mischverbau" von Sitzgestellen mit verschiedenen Anzahlen von Sitzen ist möglich und kann je nach den Bedürfnissen eingesetzt werden.

Die oben genannte Aufgabe wird erfindungsgemäß auch gelöst durch ein Personentransportmittel wie z.B. Bus oder Schienenfahrzeug, mit
- einem Fahrzeug mit einem Boden, einem Dach und mit diese miteinander verbindenden Seitenwänden und
- einer Fahrgastsitzanordnung gemäß den Ansprüchen.

Die Erfindung wird nachfolgend anhand mehrerer Ausführungsbeispiele unter Bezugnahme auf die Zeichnung näher beschrieben. Im Einzelnen zeigen dabei:
- Fign. 1 bis 4: das grundsätzliche Prinzip des durch "falten" erfolgenden Überführens von Sitzen in insbesondere öffentlichen Personentransportmitteln aus einer Längsbestuhlungsposition in eine Querbestuhlungsposition,
- Fign. 5 bis 7: eine erste nicht erfindungsgemäße Variante der Fahrgastsitzanordnung,
- Fign. 8 bis 10: eine zweite nicht erfindungsgemäße Variante der Fahrgastsitzanordnung,
- Fign. 11 bis 13: eine dritte nicht erfindungsgemäße Variante der Fahrgastsitzanordnung,
- Fign. 14 bis 16: eine vierte nicht erfindungsgemäße Variante der Fahrgastsitzanordnung,
- Fign. 17 bis 19: eine weitere nicht erfindungsgemäße Variante des grundsätzlichen Konzepts der Überführung von Fahrgastsitzen aus einer Längsbestuhlungsposition in eine Querbestuhlungsposition und
- Fign.20 und 21: die erfindungsgemäße Kombination der Fahrgastsitzanordnung mit einem Bügel für die Unterbringung von Fahrrädern in der Längsbestuhlungsposition.

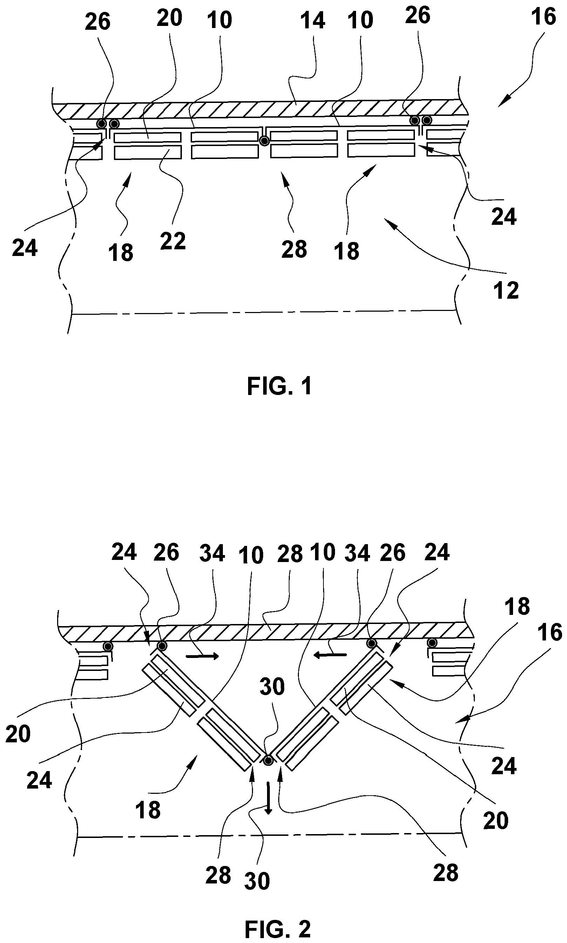

In den Fign. 1 bis 4 soll nachfolgend das grundsätzliche Konzept der Überführung einer Fahrgastsitzanordnung für ein Personentransportfahrzeug aus einer Längsbestuhlungsposition in eine Querbestuhlungsposition erläutert werden.

In der Längsbestuhlungsposition sind zwei nebeneinander angeordnete Sitzgestelle 10 der Fahrgastsitzanordnung 12 an einer Außenwand 14 eines Personentransportfahrzeugs 16 angeordnet. Typischerweise handelt es sich bei dem Personentransportfahrzeug 16 um ein Schienenfahrzeug oder ein anderes Fahrzeug zu Land zu Wasser oder für die Luft, das bspw. für den ÖPNV eingesetzt wird. Die beiden Sitzgestelle 10 weisen jeweils mindestens einen Sitz 18 auf, die ihrerseits eine Rückenlehne 20 sowie eine typischerweise klappbare Sitzfläche 22 umfassen. In den hier dargestellten nicht erfindungsgemäßen Varianten der Fahrgastsitzanordnung weist jedes Sitzgestell 10 zwei Sitze 18 auf.

Die beiden Sitzgestelle 10 sind an ihren in der Längsbestuhlungsposition einander abgewandten ersten Seitenenden 24 längsverschiebbar an der Außenwand 14 oder aber auch am Boden und/oder dem Dach des Fahrzeugs 16 längsverschiebbar geführt. Darüber hinaus sind sie an diesen ersten Seitenenden 24 auch um jeweils eine Vertikal- oder Hochachse 26 schwenkbar gelagert. Somit lassen sich die beiden Sitzgestelle 10 ins Innere des Fahrzeugs 16 hinein verschwenken, wie es in Fig. 2 angedeutet ist.

Bei dem Konzept gemäß den Fign. 1 bis 4 sind die beiden benachbarten Sitzgestelle 10 an ihren in der Längsbestuhlungsposition einander zugewandten zweiten Seitenenden 28 gelenkig miteinander verbunden, und zwar um eine ebenfalls Vertikal- bzw. Hochachse 30.

Grundsätzlich sind die Sitzgestelle 10 in ihrer Längsbestuhlungsposition nach Fig. 1 gegen ungewollte Bewegungen im Fahrzeug 16 verriegelt. Nach Lösen der Verriegelung und durch Bewegung der beiden Sitzgestelle 10 zur Mitte des Fahrzeugs 16 (siehe den Pfeil 32 in Fig. 2) erfolgt die Überführung der Fahrgastsitzanordnung 12 aus der Längsbestuhlungsposition in die Querbestuhlungsposition, wobei sich die ersten Seitenenden 24 beider Gestelle 10 aufeinander zubewegen (siehe die Pfeile 34 in Fig. 2), indem sie an der Außenwand 14 des Fahrzeugs 16, wie oben beschrieben, längsverschiebbar geführt sind. Alternativ bzw. zusätzlich kann diese Längsverschiebbarkeit auch noch am Boden und/oder am Dach des Fahrzeugs 16 erfolgen. Beim Überführen aus der Längsbestuhlungsposition in die Querbestuhlungsposition sind die Sitzflächen 22 der Sitze 18 typischerweise hochgeklappt.

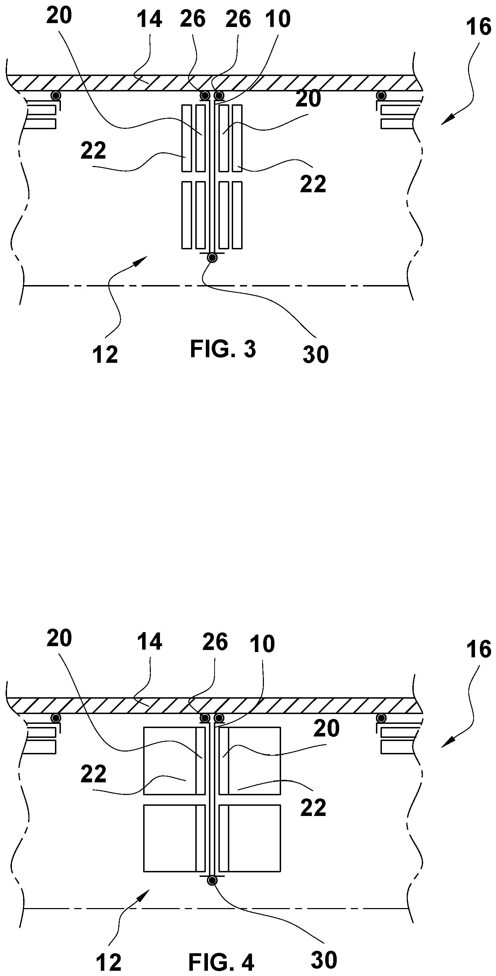

In der Querbestuhlungsposition der Fahrgastsitzanordnung 12 gemäß Fig. 3 erfolgt wiederum eine Verriegelung der beiden Sitzgestelle miteinander und/oder der Sitzgestelle mit dem Fahrzeug 16. Nun können im Bedarfsfalle die Sitzflächen 22 heruntergeklappt werden, um eine Sitzmöglichkeit für die Fahrgäste zu geben.

Wie anhand der Fign. 1 und 4 erkennbar ist, kann auf diese Weise die Bestuhlung des Personentransportfahrzeugs 16 an die jeweiligen Bedürfnisse hinsichtlich eines zu erwartenden Fahrgastaufkommens angepasst werden. In Spitzenzeiten mit einem hohen zu erwartenden Fahrgastaufkommen bietet die Längsbestuhlungsposition den Vorteil, dass möglichst viel Raum für Steh- und Stellplätze zur Verfügung gestellt werden kann. Wird dies nicht benötigt, so können die Sitze in die Querbestuhlungsposition gemäß den Fign. 3 und 4 überführt werden, was bedeutet, dass die Fahrgäste in Fahrtrichtung oder entgegengesetzt dazu Platz nehmen können, was mitunter für die Fahrgäste bequemer ist, als quer zur Fahrtrichtung zu sitzen.

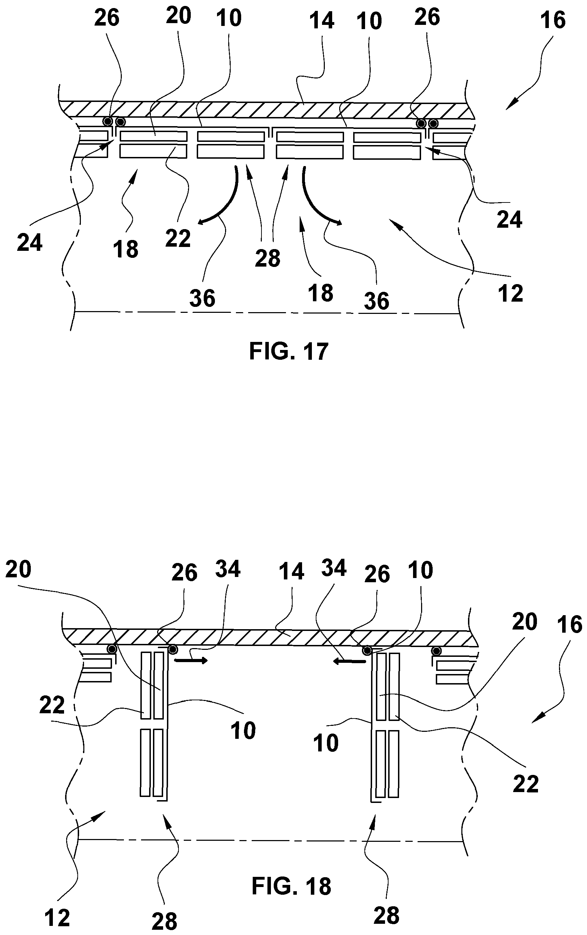

Eine nicht erfindungsgemäße Variante des zuvor beschriebenen grundsätzlichen Konzepts der Überführung einer Fahrgastsitzanordnung aus der Längsbestuhlungsposition in die Querbestuhlungsposition und umgekehrt ist in den Fign. 17 bis 19 gezeigt. Der Unterschied zum Konzept der Fign. 1 bis 4 besteht bei dem Konzept nach den Fign. 17 bis 19 darin, dass die beiden Sitzgestelle 10 an ihrem in der Längsbestuhlungsposition einander zugewandten zweiten Seitenenden 28 nicht gelenkig miteinander verbunden sind. Zum Zwecke einer Verriegelung der Sitzgestelle 10 miteinander, was aus Sicherheitsgründen von Vorteil ist, können die beiden Sitzgestelle 10 weiterhin miteinander verbunden sein. Diese Verbindung wird dann aber beim Überführen aus der Längsbestuhlungsposition in die Querbestuhlungsposition aufgehoben.

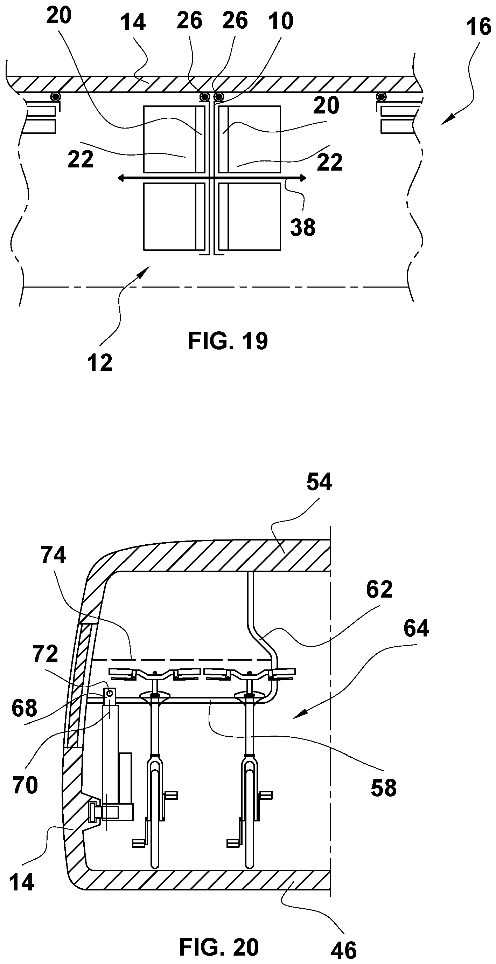

Fig. 17 zeigt durch die Pfeile 36, wie die beiden Sitzgestelle 10 zur Überführung aus der Längsbestuhlungsposition in die Querbestuhlungsposition zunächst einzeln verschwenkt werden. Es ergibt sich dann die Zwischensituation gemäß Fig. 18, aus der heraus die beiden Sitzgestelle 10 aufeinander zubewegt werden (siehe die Pfeile 34), um dann mit den Rückenlehnen ihrer Sitze "Rücken an Rücken" zu gelangen, womit die Querbestuhlungsposition erreicht ist (Fig. 19). Die Verriegelung der Sitzgestelle ist in diesen Fign. (wie auch in den Fign. 1 bis 4) der Übersichtlichkeit halber nicht gezeigt. Hier bieten sich Verriegelung der Sitzgestelle untereinander und/oder mit der Außenwand 14, dem Boden und/oder dem Dach des Fahrzeugs 16 an. Ein weiteres Merkmal des Konzepts gemäß den Fign. 17 bis 19 kann darin bestehen, dass die Position der Fahrgastsitzanordnung 12 innerhalb des Fahrzeugs 16 variabel gestaltet werden kann (angedeutet in Fig. 19 durch den Pfeil 38).

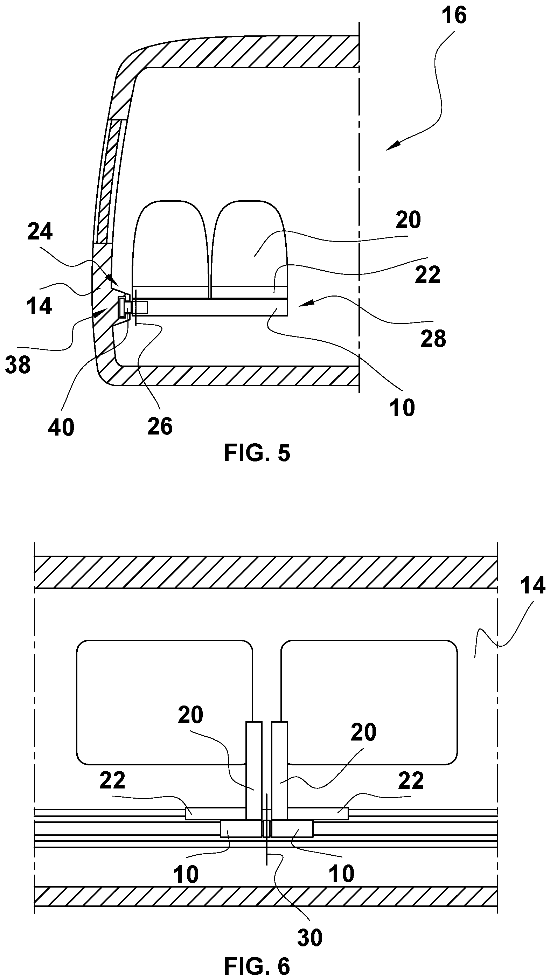

In den Fign. 5 bis 7 ist eine erste Variante der Fahrgastsitzanordnung 12 gezeigt, bei der die Sitzgestelle 10 an ihren ersten Seitenenden 24 in einem in diesem Beispiel als C-förmige Nut ausgeführten Profil 38 in der Außenwand 14 des Fahrzeugs 16 längsverschiebbar geführt sind. Die Sitzgestelle 10 stehen in der Querbestuhlungsposition (siehe Fig. 5) von der Außenwand 14 des Fahrzeugs ins Innere nach Art von freitragenden, einseitig eingespannten Balken ab. Sie sind über jeweils ein erstes Tragelement 40 mit dem Profil 38 längsverschiebbar verbunden und dadurch geführt.

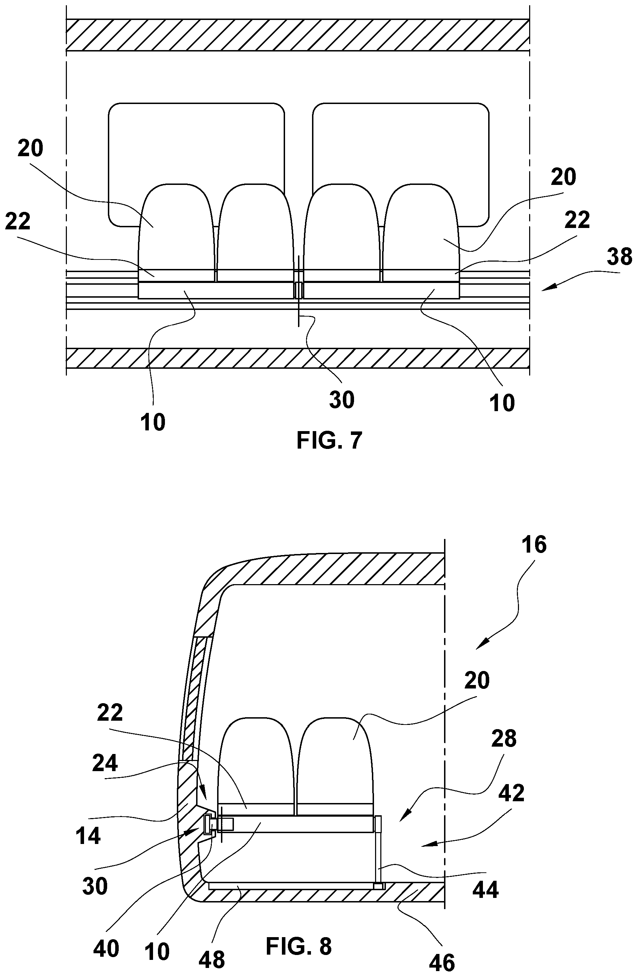

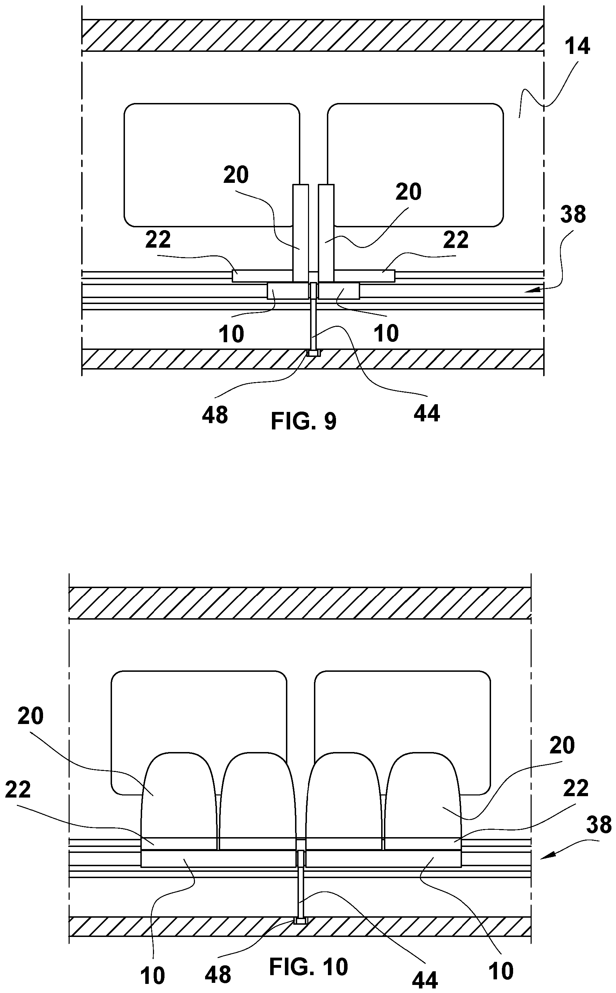

Bei der nicht erfindungsgemäßen Variante gemäß den Fign. 8 bis 10 sind die beiden Sitzgestelle 10 an ihren in der Längsbestuhlungsposition einander zugewandten zweiten Seitenenden 28 über ein gemeinsames zweites Tragelement 42 abgestützt, das in diesem Ausführungsbeispiel als Stütze 44 zum Abstützen gegenüber dem Boden 46 des Fahrzeugs 16 ausgeführt ist.

Das zweite Tragelement 42 ist in diesem Ausführungsbeispiel in einer Quer-Nut 48 odgl. Profil geführt, das am Boden 46 des Fahrzeugs 16 angeordnet ist.

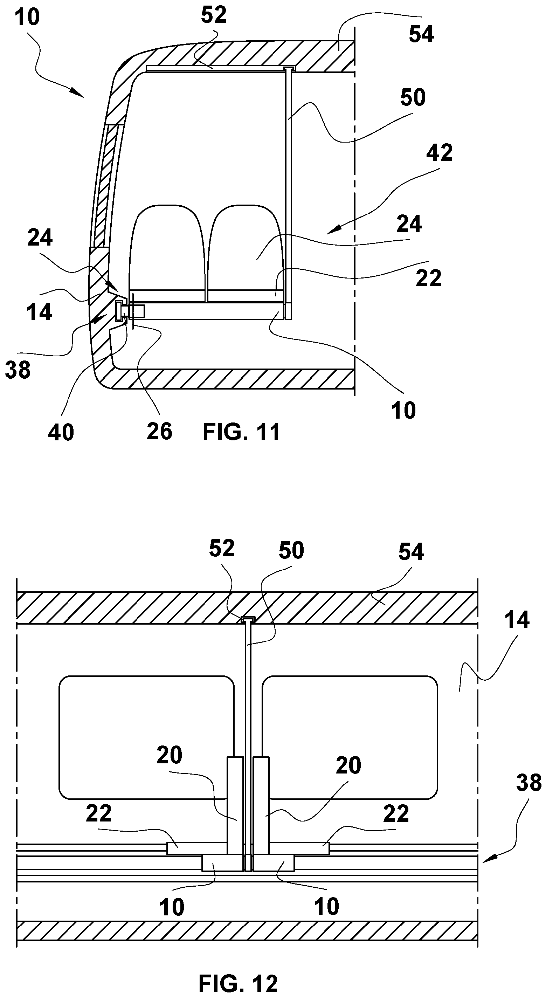

Bei der nicht erfindungsgemäßen Variante gemäß den Fign. 11 bis 13 ist das zweite Tragelement 42 als nach oben verlaufende Zugstange 50 ausgeführt, die an einem Profil 52 (bspw. einer Nut) im Dach 54 des Fahrzeugs gegen Zugbelastungen gesichert geführt ist. Wie im Falle des Profils im Boden 46 beim Ausführungsbeispiel der Fign. 8 bis 10 verläuft auch das Profil 52 am Dach 54 des Fahrzeugs 16 gemäß der Variante der Fign. 11 bis 13 quer zur Längserstreckung des Fahrzeugs 16.

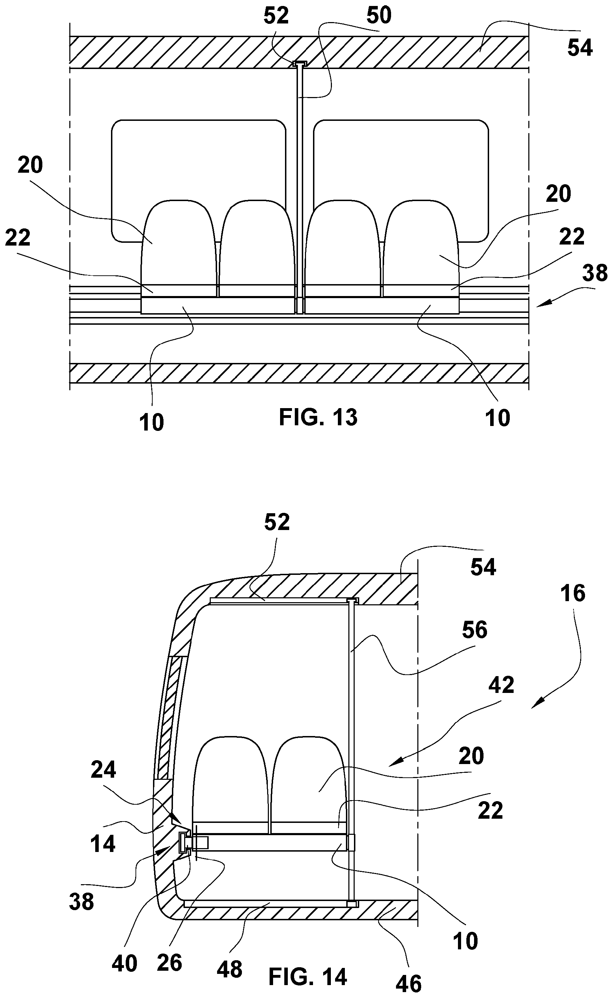

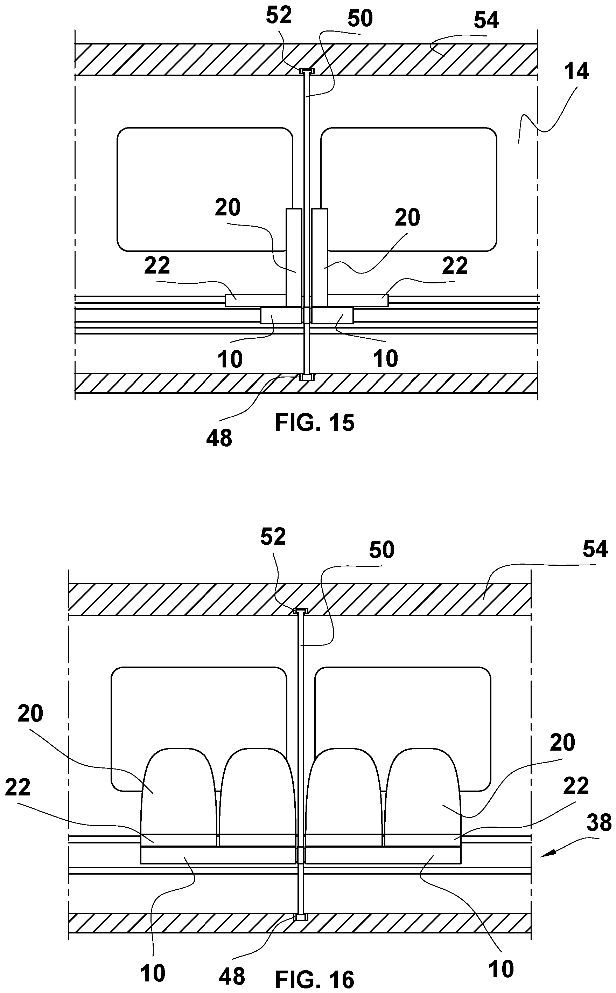

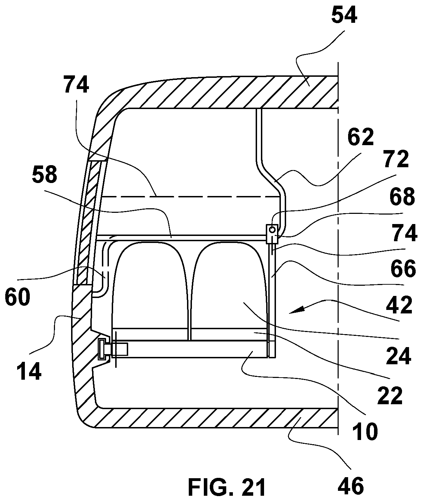

In den Fign. 14 bis 16 ist eine nicht erfindungsgemäßen Variante gezeigt, die das zweite Tragelement gemäß der beiden Varianten nach den Fign. 8 bis 10 und Fign. 11 bis 13 miteinander kombiniert. Das zweite Tragelement 42 ist also hier als vom Boden 46 bis zum Dach 54 des Fahrzeugs 16 durchgehende Stange 56 ausgeführt, an der die beiden Sitzgestelle 10 an ihren zweiten Seitenenden 28 gegen Längsverschiebungen längs der Stange 56 gesichert angeordnet sind. In den Fign. 20 und 21 ist gezeigt, dass sich die Fahrgastsitzanordnung erfindungsgemäß mit einer Halterung für im Fahrzeug 16 mitzuführenden Fahrräder kombinieren lässt. Die Halterung für die Fahrräder ist hierbei als Horizontalstrebe 58 ausgeführt, die quer zur Fahrtrichtung verläuft und etwas höher als die typische Sattelhöhe eines Fahrrads angeordnet ist. Die Horizontalstrebe 58 kann ggfs. unter Verwendung eines weiter nach unter verlaufenden Verbindungselements 60 (in Fig. 20 gestrichelt dargestellt) mit der Außenwand 14 des Fahrzeugs 16 verbunden sein, um andererseits an ihrem anderen Ende über ein zweites Verbindungselement 62 bspw. an dem Dach 54 des Fahrzeugs 16 gehalten zu sein. Alternativ könnte aber die Horizontalstrebe 58 sich auch gegenüber dem Boden 46 des Fahrzeugs 16 abstützen.

In der Längsbestuhlungsposition (siehe Fig. 20) ist die Horizontalstrebe 58 frei zugänglich, so dass nun Fahrräder 64 mit ihren Sätteln auf der Horizontalstrebe 58 ruhend untergebracht werden können.

In der Querbestuhlungsposition (siehe Fig. 21) ist dies nicht möglich; allerdings stört die Horizontalstrebe 58 nicht weiter, wenn man sie direkt oberhalb der Rückenlehnen 24 der Sitze 18 oder aber auch zwischen den Rückenlehnen 24 der Sitze 18 bei Einnahme von deren Querbestuhlungsposition anordnet.

Wie in den Fign. 20 und 21 angedeutet, kann die Horizontalstrebe 58 auch dazu verwendet werden, um die beiden Sitzgestelle 10 an ihren zweiten Seitenenden 28 an der Horizontalstrebe 58 "aufgehängt" zu sichern, wozu in diesem Ausführungsbeispiel ein auf Zug beanspruchbares zweites Tragelement 42 in Form bspw. einer Stange 66 mit einem Verbindungsende 68 an ihrem oberen Ende vorgesehen ist. Das Verbindungsende 68 umgreift dabei bspw. die Horizontalstrebe 58 und ist um eine parallel zur Längsachse der Stange 66 verlaufende Drehachse 70 drehbar mit der Stange 66 verbunden. Das Verbindungsende 68 kann einen Gleit- oder Rollkörper 72 aufweisen, mittels dessen es an der Horizontalstrebe 58 längsverschiebbar entlang gleitet oder entlang rollt.

### BEZUGSZEICHENLISTE

10 Sitzgestelle
12 Fahrgastsitzanordnung
14 Außenwand
16 Personentransportfahrzeug
18 Sitz
20 Rückenlehne
22 typischerweise klappbare Sitzfläche
24 Rückenlehnen
26 Hochachse
28 zweiten Seitenenden
30 Hochachse
32 Pfeil
34 Pfeile
36 Pfeile
38 als C-förmige Nut ausgeführtes Führungsprofil
40 erstes Tragelement
42 zweites Tragelement
44 Stütze
46 Boden
48 als Quer-Nut ausgeführtes Führungsprofil
50 Zugstange
52 Führungsprofil
54 Dach
56 Stange
58 Horizontalstrebe
60 Verbindungselement
62 zweites Verbindungselement
64 Fahrräder
66 Stange
68 Verbindungsende
70 Drehachse
72 Gleit- oder Rollkörper

## Patentansprüche

1. Fahrgastsitzanordnung für ein Personentransportfahrzeug wie z.B. einen Bus oder ein Schienenfahrzeug, mit
- einer ersten Gruppe von Sitzen mit mindestens einem ersten Sitz (18) und
- einer zweiten Gruppe von Sitzen mit mindestens einem zweiten Sitz (18),
- wobei jeder Sitz (18) einer Gruppe ein Sitzgestell (10) oder die mehreren Sitze (18) einer Gruppe ein gemeinsames Sitzgestell (10) aufweisen,
- wobei jeder Sitz (18) eine Rückenlehne (20) und eine insbesondere klappbare Sitzfläche (22) aufweist,
- wobei die Sitzgestelle (10) beider Gruppen an ihren einen ersten Seitenenden (24) an dem Boden (46), an dem Dach (54) oder an der Seitenwand (14) des Personentransportfahrzeugs längsverschiebbar bewegbar sowie schwenkbar und haltbar und/oder abstützbar sind,
- wobei die Sitzgestelle (10) beider Gruppen jeweils aus einer Längsbestuhlungsposition, in der sie nebeneinander angeordnet sind, in eine Querbestuhlungsposition, in der sie mit den Rückenlehnen (20) der Sitze (18) einander zugewandt angeordnet sind, und umgekehrt überführbar sind und
- wobei die Sitzgestelle (10) beider Gruppen an ihren jeweiligen anderen zweiten Seitenenden (28) mittels eines Gelenks um mindestens eine Vertikalachse (30) schwenkbar miteinander gekoppelt sind,
**gekennzeichnet durch**
- eine mit der Seitenwand (14) des Fahrzeugs und entweder dem Dach (54) des Fahrzeugs oder dem Boden (46) des Fahrzeugs oder sowohl dem Dach (54) als auch dem Boden (46) des Fahrzeugs verbindbare Horizontalstrebe (58), die quer zur Längserstreckung des Fahrzeugs und oberhalb der beiden Sitzgestelle (10) oder hinter oder zwischen oder oberhalb der Rückenlehnen (20) der Sitze (18) der beiden Sitzgestelle (10) verläuft, wenn sich diese in ihrer Querbestuhlungsposition befinden, wobei diese Horizontalstrebe (58) bei sich in ihrer Längsbestuhlungsposition befindenden Sitzgestellen (10) zur Halterung von von Fahrgästen mitgeführten Gegenständen, wie z.B. Koffer oder Sportgeräten oder Fahrgeräten wie z.B. Roller oder auch Rollstühle und von Fahrrädern (64) vorgesehen ist, die durch Auflegen der vorderen Abschnitte ihrer Sättel auf der Horizontalstrebe (58) auf dieser hängend positionierbar sind,
- wobei die Sitzgestelle (10) der beiden Gruppen an ihren gelenkig miteinander verbundenen zweiten Seitenenden (28) an der Horizontalstrebe (58) direkt oder indirekt verschiebbar geführt und gehalten sind.

2. Fahrgastsitzanordnung nach Anspruch 1, **dadurch gekennzeichnet, dass** die beiden Sitzgestellen (10) in deren Längsbestuhlungsposition und insbesondere auch in deren Querbestuhlungsposition miteinander verriegelbar und insbesondere miteinander automatisch verriegelbar sind und/oder dass die beiden Sitzgestelle (10) in den beiden Positionen zusätzlich zu ihrer Längsverschiebbarkeitsführung an dem Fahrzeug gegen eine Bewegung in die jeweilige andere Position arretierbar sind.

3. Fahrgastsitzanordnung nach einem der Ansprüche 1 oder 2, **dadurch gekennzeichnet, dass** die beiden Sitzgestelle (10) an ihren ersten Enden (24) direkt oder indirekt an einem Führungsprofil (38) in oder an der Seitenwand (14) und/oder in oder an dem Boden (46) und/oder in oder an dem Dach (54) des Fahrzeugs längsverschiebbar bewegbar sind.

4. Fahrgastsitzanordnung nach einem der Ansprüche 1 bis 3, **gekennzeichnet durch** jeweils ein erstes Tragelement (40) an den ersten Seitenenden (24) der beiden Sitzgestelle (10), wobei die beiden Sitzgestelle (10) mit dem jeweiligen Tragelement (40) schwenkbar verbunden sind und wobei die ersten Tragelemente (40) an einem Führungsprofil (38) in oder an dem Boden (46) des Fahrzeugs und/oder an einem Führungsprofil in oder an dem Dach (54) des Fahrzeugs oder an einem Führungsprofil in oder an der Seitenwand (14) des Fahrzeugs längsverschiebbar sind.

5. Fahrgastsitzanordnung nach einem der Ansprüche 1 bis 4, **dadurch gekennzeichnet, dass** die gegebenenfalls miteinander gelenkig verbundenen zweiten Seitenenden (28) der beiden Sitzgestelle (10) ein gemeinsames zweites Tragelement (42) oder getrennte zweite Tragelemente (42) zum Abstützen gegen den Boden (46) und/oder für eine Verbindung mit dem Dach (54) eines Fahrzeugs aufweisen.

6. Fahrgastsitzanordnung nach Anspruch 5, **dadurch gekennzeichnet, dass** das zweite Tragelement (42) oder die zweiten Tragelemente (42) an einem Führungsprofil (48) in oder an dem Boden (46) des Fahrzeugs und/oder an einem Führungsprofil (52) in oder an dem Dach (54) des Fahrzeugs längsverschiebbar ist bzw. sind, wobei das jeweilige Führungsprofil (48, 52) quer zur Längserstreckung des Fahrzeugs verläuft, oder dass das zweite Tragelement (42) oder die zweiten Tragelemente (42) eine Tragposition, in der sie auf dem Boden (46) ruhen und/oder mit dem Dach (54) verbunden sind, oder eine Parkposition, in der sie weggeklappt oder von einem oder beiden Sitzgestellen (10) abgenommen sind, einnehmen können.

7. Fahrgastsitzanordnung nach einem der Ansprüche 1 bis 6, **dadurch gekennzeichnet, dass** die Horizontalstrebe (58) durch ein erstes Verbindungselement (60) mit der Seitenwand (14) des Fahrzeugs, entlang der sich die beiden Sitzgestelle (10) in ihrer Längsbestuhlungsposition befinden, und durch ein zweites Verbindungselement (62) mit dem Dach (54) und/oder dem Boden (46) des Fahrzeugs und/oder sowohl dem Dach (54) als auch dem Boden (46) des Fahrzeugs verbunden ist.

8. Fahrgastsitzanordnung nach einem der Ansprüche 1 bis 7, **dadurch gekennzeichnet, dass** jedes Sitzgestell (10) zwei oder drei Sitze (18) aufweist.

9. Personentransportmittel wie z.B. Bus oder Schienenfahrzeug, mit
- einem Fahrzeug (16) mit einem Boden (46), einem Dach (54) und mit diese miteinander verbindenden Seitenwänden (14) und
- einer Fahrgastsitzanordnung (12) nach einem der vorhergehenden Ansprüche.

## Claims

1. Passenger seat arrangement for a passenger transport vehicle such as a bus or a rail vehicle, comprising
- a first group of seats comprising at least one first seat (18) and
- a second group of seats comprising at least one second seat (18),
- each seat (18) of a group comprising a seat frame (10), or the plurality of seats (18) of a group comprising a common seat frame (10),
- each seat (18) comprising a backrest (20) and an in particular foldable sitting surface (22),
- the seat frames (10) of both groups being movable for longitudinal displacement at their first lateral ends (24), as well as pivotable and retainable and/or supportable on the floor (46), at the roof (54) or the sidewall (14) of the passenger transport vehicle,
- the seat frames (10) of both groups each being transitionable from a longitudinal seating position in which they are arranged side by side to a transversal seating position in which they are arranged with the backrests (20) of the seats (18) facing each other, and vice versa, and
- the seat frames (10) of both groups being coupled to be pivotable about at least one vertical axis (30) by means of a hinge at their respective other, second lateral ends (28),
**characterized by**
- a horizontal strut (58) adapted for connection with the sidewall (14) of the vehicle or either the roof (54) of the vehicle or the floor (46) of the vehicle or both the roof (54) and the floor (46) of the vehicle, said strut extending transversely to the longitudinal extension of the vehicle and above the two seat frames (10) or behind or between or above the backrests (20) of the seats (18) of the two seat frames (10) when these are in their transversal seating position, this horizontal strut (58), with the seat frames (10) in their longitudinal seating position, being provided for retaining objects carried along by passengers, such as suitcases or sports equipment or driving devices such as scooters or wheelchairs, and bicycles (64) which can be positioned hanging on the horizontal strut (58) by placing the front sections of their saddles on the same,
- the seat frames (10) of both groups being guided and held for direct or indirect displacement on the horizontal strut (58) at their second laterals ends (28) connected with each other.

2. Passenger seat arrangement according to claim 1, **characterized in that** the two seat frames (10) are interlockable and in particular automatically interlockable in their longitudinal seating position and in particular also in their transversal seating position, and/or **in that** in both positions, the two seat frames (10) can be locked against a movement into the respective other position in addition to their longitudinal displacement guiding on the vehicle.

3. Passenger seat arrangement according to one of claims 1 or 2, **characterized in that** the two seat frames (10) are longitudinally displaceable at their first ends (24) either directly or indirectly on a guiding profile (38) in or on the sidewall (14) and/or in or on the floor (46) and/or in or on the roof (54) of the vehicle.

4. Passenger seat arrangement according to one of claims 1 to 3, **characterized by** a respective first support element (40) at the first lateral ends (24) of the two seat frames (10), the two seat frames (10) being pivotally connected with the respective support element (40), and the first support element (40) being longitudinally displaceable on a guiding profile (38) in or on the floor (46) of the vehicle and/or on a guiding profile in or on the roof (54) of the vehicle or on a guiding profile in or on the sidewall (14) of the vehicle.

5. Passenger seat arrangement according to one of claims 1 to 4, **characterized in that** the second lateral ends (28) of the two seat frames (10), which are possibly connected with each other in a hinged manner, comprise a common second support element (42) or separate second support elements (42) for bracing against the floor (46) and/or for connection with the roof (54) of a vehicle.

6. Passenger seat arrangement according to claim 5, **characterized in that** the second support element (42) or the second support elements (42) is or are longitudinally displaceable on a guiding profile (48) in or on the floor (46) of the vehicle and/or on a guiding profile (52) in or on the roof (54) of the vehicle, the respective guiding profile (48, 52) extends transversely to the longitudinal extension of the vehicle, or **in that** the second support element (42) or the second support elements (42) can take a supporting position in which they rest on the floor (46) and/or are connected with the roof (54), or a parking position in which they are folded away or taken from one or both seat frames (10).

7. Passenger seat arrangement according to one of claims 1 to 6, **characterized in that** the horizontal strut (58) is connected by a first connecting element (62) with the sidewall (14) of the vehicle along which the two seat frames (10) are arranged in their longitudinal seating position, and is connected by a second connecting element (62) with the roof (54) and/or the floor (46) of the vehicle and/or both the roof (54) and the floor (46) of the vehicle.

8. Passenger seat arrangement according to one of claims 1 to 7, **characterized in that** each seat frame (10) comprises two or three seats (18).

9. Passenger transportation means such as a bus or a rail vehicle, comprising
- a vehicle (16) having a floor (46), a roof (54) and sidewalls (14) connecting the same, and
- a passenger seat arrangement (12) according to one of the preceding claims.

## Revendications

1. Agencement de sièges pour passagers pour un véhicule de transport de personnes, tel que par exemple un bus ou un véhicule ferroviaire, comportant
- un premier groupe de sièges comportant au moins un premier siège (18) et
- un second groupe de sièges comportant au moins un deuxième siège (18),
- dans lequel chaque siège (18) d'un groupe présente une armature de siège (10) ou les sièges (18) d'un groupe présentent une armature de sièges (10) commune,
- dans lequel chaque siège (18) présente un dossier (20) et une surface d'assise (22) en particulier rabattable,
- dans lequel les armatures de sièges (10) des deux groupes sont mobiles de manière à pouvoir coulisser longitudinalement à l'une de leurs premières extrémités latérales (24) sur le plancher (46), sur le toit (54) ou sur la paroi latérale (14) du véhicule de transport de personnes, et peuvent pivoter et être maintenues et/ou soutenues,
- dans lequel les armatures de sièges (10) des deux groupes peuvent être respectivement transférées d'une position d'assise longitudinale, dans laquelle elles sont disposées côte à côte, à une position d'assise transversale, dans laquelle elles sont disposées avec les dossiers (20) des sièges (18) tournés les uns vers les autres, et inversement, et
- dans lequel les armatures de sièges (10) des deux groupes sont accouplées les unes aux autres de manière à pouvoir pivoter autour d'au moins un axe vertical (30) au niveau de leurs autres secondes extrémités latérales (28) respectives au moyen d'une articulation,
**caractérisé par**
- une entretoise horizontale (58) pouvant être reliée à la paroi latérale (14) du véhicule et soit au toit (54) du véhicule ou au plancher (46) du véhicule, soit à la fois au toit (54) et au plancher (46) du véhicule, laquelle entretoise horizontale s'étend transversalement à l'extension longitudinale du véhicule et au-dessus des deux armatures de sièges (10) ou derrière ou entre les dossiers (20) des sièges (18) des deux armatures de sièges (10) ou au-dessus de ceux-ci, lorsque lesdites armatures de sièges se trouvent dans leur position d'assise transversale, dans lequel ladite entretoise horizontale (58) sert, lorsque les armatures de sièges (10) se trouvent dans leur position d'assise longitudinale, à maintenir des objets emportés par les passagers, tels que par exemple des valises ou des appareils pour le sport ou des appareils pour le déplacement tels que par exemple des scooters ou également des fauteuils roulants et des bicyclettes (64) qui peuvent être positionnés en suspension sur l'entretoise horizontale (58) en posant les sections avant de leurs selles sur ladite entretoise horizontale,
- dans lequel les armatures de sièges (10) des deux groupes sont guidées et maintenues de manière à pouvoir coulisser directement ou indirectement sur l'entretoise horizontale (58) au niveau de leurs secondes extrémités latérales (28) reliées entre elles de manière articulée.

2. Agencement de sièges pour passagers selon la revendication 1,
**caractérisé en ce que** les deux armatures de sièges (10) peuvent être verrouillées l'une à l'autre dans leur position d'assise longitudinale et en particulier également dans leur position d'assise transversale et peuvent en particulier être verrouillées automatiquement l'une à l'autre **et/ou en ce que** les deux armatures de sièges (10) peuvent être bloquées dans les deux positions, en plus de leur guidage de manière à pouvoir coulisser longitudinalement sur le véhicule, à l'encontre d'un mouvement dans l'autre position respective.

3. Agencement de sièges pour passagers selon l'une des revendications 1 ou 2, **caractérisé en ce que** les deux armatures de sièges (10) sont mobiles de manière à pouvoir coulisser longitudinalement à leurs premières extrémités (24), directement ou indirectement, sur un profilé de guidage (38) dans ou sur la paroi latérale (14) et/ou dans ou sur le plancher (46) et/ou dans ou sur le toit (54) du véhicule.

4. Agencement de sièges pour passagers selon l'une des revendications 1 à 3,
**caractérisé par** respectivement un premier élément de support (40) aux premières extrémités latérales (24) des deux armatures de sièges (10), dans lequel les deux armatures de sièges (10) sont reliées de manière à pouvoir pivoter avec l'élément de support (40) respectif et dans lequel les premiers éléments de support (40) peuvent coulisser longitudinalement sur un profilé de guidage (38) dans ou sur le plancher (46) du véhicule et/ou sur un profilé de guidage dans ou sur le toit (54) du véhicule ou sur un profilé de guidage dans ou sur la paroi latérale (14) du véhicule.

5. Agencement de sièges pour passagers selon l'une des revendications 1 à 4, **caractérisé en ce que** les secondes extrémités latérales (28) des deux armatures de sièges (10), éventuellement reliées entre elles de manière articulée, présentent un second élément de support (42) commun ou des seconds éléments de support (42) séparés pour l'appui contre le plancher (46) et/ou pour une liaison avec le toit (54) d'un véhicule.

6. Agencement de sièges pour passagers selon la revendication 5,
**caractérisé en ce que** le second élément de support (42) ou les seconds éléments de support (42) peuvent coulisser longitudinalement sur un profilé de guidage (48) dans ou sur le plancher (46) du véhicule et/ou sur un profilé de guidage (52) dans ou sur le toit (54) du véhicule, dans lequel le profilé de guidage (48, 52) respectif s'étend transversalement à l'extension longitudinale du véhicule, ou **en ce que** le second élément de support (42) ou les seconds éléments de support (42) peuvent prendre une position de support dans laquelle ils reposent sur le plancher (46) et/ou sont reliés au toit (54), ou une position stationnaire dans laquelle ils sont escamotés ou enlevés de l'une ou des deux armatures de sièges (10).

7. Agencement de sièges pour passagers selon l'une des revendications 1 à 6, **caractérisé en ce que** l'entretoise horizontale (58) est reliée par un premier élément de liaison (60) à la paroi latérale (14) du véhicule le long de laquelle les deux armatures de sièges (10) sont dans leur position d'assise longitudinale, et est reliée par un second élément de liaison (62) au toit (54) et/ou au plancher (46) du véhicule et/ou à la fois au toit (54) et au plancher (46) du véhicule.

8. Agencement de sièges pour passagers selon l'une des revendications 1 à 7, **caractérisé en ce que** chaque armature de sièges (10) comprend deux ou trois sièges (18).

9. Moyen de transport de personnes tel que par exemple bus ou véhicule ferroviaire, comportant
- un véhicule (16) comportant un plancher (46), un toit (54) et des parois latérales (14) les reliant entre eux et
- un agencement de sièges pour passagers (12) selon l'une des revendications précédentes.
